# EUROPÄISCHE PATENTSCHRIFT

(11) **EP 0 536 489 B1**
(45) Veröffentlichungstag und Bekanntmachung des Hinweises auf die Patenterteilung: **07.02.1996**
(21) Anmeldenummer: 92112660.3
(22) Anmeldetag: 24.07.1992
(51) Int. Cl.: B60L 11/18

(54) **Schaltungsanordnung für den Betrieb eines Gleichstrommotors als Antrieb für ein Fahrzeug, insbesondere Flurförderfahrzeug**
Circuit arrangement for the control of a DC-motor for driving a vehicle, in particular an industrial truck
Circuit de contrôle pour un moteur à courant continu pour l'entraînement d'un véhicule, en particulier un véhicule de manutention

(30) Priorität: 08.10.1991 DE 4133304
(43) Veröffentlichungstag der Anmeldung: 14.04.1993
(73) Patentinhaber: Jungheinrich Aktiengesellschaft, D-22047 Hamburg (DE)
(72) Erfinder: Oestmann, Harald, Dipl.-Ing., W-2000 Hamburg 65 (DE); de Morais-Monteiro, Andreas, W-2000 Hamburg 60 (DE)
(74) Vertreter: Dipl.-Ing. H. Hauck, Dipl.-Ing. E. Graalfs, Dipl.-Ing. W. Wehnert, Dr.-Ing. W. Döring

(56) Entgegenhaltungen:
- DE-A- 1 513 610
- DE-A- 2 111 182

## Beschreibung

Die Erfindung bezieht sich auf eine Schaltungsanordnung für den Betrieb eines Gleichstrommotors als Antrieb für ein Fahrzeug nach dem Oberbegriff des Patentanspruchs 1.

Eine Schaltungsanordnung der eingangs genannten Art ist aus der DE-A-15 13 610 bekanntgeworden. Der elektronische Schalter, der die Batteriespannung zum Beispiel pulsweitenmoduliert auf den Motor aufschaltet, kann durch ein sogenanntes Kurzschlußschütz überbrückt werden. Die Ansteuerung des Kurzschlußschützes erfolgt in Abhängigkeit von verschiedenen Überbrückungsbedingungen. Es wird immer eingeschaltet, wenn der Stellwert einen bestimmten Wert überschreitet, zum Beispiel 97% des Maximalstellwerts. Das Überbrückungsschütz wird ausgeschaltet, wenn der Motorstrom über einen bestimmten Wert steigt und das Steuergerät nicht auf Vollastanforderung gestellt ist. Ist das Überbrückungsschütz geschaltet und damit der Schützkontakt stromführend, wird es nicht ausgeschaltet, auch wenn der Stellwert einen kleineren Wert erreicht, falls der Sollwertgeber einen bestimmten Wert überschreitet. Hierbei wird eine elektronische Selbsthaltung bei Vollastanforderung erhalten. Bei Vollastanforderung und Maximalmotorstrom wird auch bei relativ kleinem Stellwert das Überbrückungsschütz zeitverzögert eingeschaltet. Es wird erst wieder ausgeschaltet, wenn die Vollastanforderung zurückgenommen wird. Insbesondere dient das Überbrückungsschütz zur Minimierung der Verluste im Stellglied, das bei der bekannten Schaltungsanordnung von einem Thyristor verwirklicht wird. Außerdem soll die Funktionsfähigkeit bei einem Stellwert bei etwa 100% verbessert werden.

Bei einem Anfahren eines Fahrzeugs, beispielsweise eines Flurförderzeugs am Hang ist der Aufbau eines erheblichen Momentes erforderlich, bis das Fahrzeug anfahren kann. Der Motor wird daher während des Hochlaufs mit einem hohen Strom belastet. Dabei besteht die Gefahr, daß das auf die Räder aufgebrachte Moment diese zu einem Durchrutschen bringt. Eine derartige Situation ist für Flurförderzeuge unter Umständen gefährlich, weil sich das Fahrzeug quer zum Hang stellen und umkippen kann.

Der Erfindung liegt daher die Aufgabe zugrunde, eine Schaltungsanordnung für den Betrieb eines Gleichstrommotors als Antrieb für ein Fahrzeug, insbesondere Flurförderzeug, zu schaffen, die einen Schlupf des Antriebsrades bei hohen Drehmomenten bzw. Drehmomentsprüngen vermeidet.

Diese Aufgabe wird durch die Merkmale des Patentanspruchs 1 gelöst.

Bei der erfindungsgemäßen Schaltungsanordnung steuert die Treiberschaltung das Kurzschlußschütz impulsweise dann an, wenn der Motorstrom einen vorgegebenen Höchstwert überschreitet und der Stellwert nach dem Hochlauf dem vorgegebenen Sollwert entspricht. Bei der erfindungsgemäßen Schaltung wird mithin der Kurzschlußkontakt intermittierend geschlossen und geöffnet, so daß sich das Moment am Motor nur stetig erhöht, wodurch ein Schlupf am Antriebsrad vermieden wird. Das Förderfahrzeug bleibt daher in jedem Falle manövierfähig. Von der Vorgabe eines Sollwerts am Fahrschalter bis zur Erzeugung eines auf den Motor gegebenen Stellwerts vergeht naturgemäß eine gewisse Zeit, die von den Zeitkonstanten der einzelnen Bauelemente abhängt. Es versteht sich, daß das Kurzschlußschütz sinnfälligerweise nur dann eingeschaltet wird, wenn der Hochlauf abgeschlossen ist und der das Tastverhältnis am elektronischen Leistungsschalter bestimmende Sollwert dem vorgegebenen Sollwert entspricht.

Bei der erfindungsgemäßen Schaltungsanordnung ist eine Meßvorrichtung für den Motorstrom vorgesehen, und die Treiberschaltung steuert das Kurzschlußschütz nur an, wenn der Motorstrom einen vorgegebenen Höchstwert überschreitet. Dies ist zum Beispiel der Fall, wenn der maximal zulässige Dauerstrom annähernd erreicht oder gar überschritten wird. Dadurch wird ein energetisch optimaler Fahrbetrieb erhalten, d.h. eine minimale Verlustleistung.

Bei einer pulsweitenmodulierten Regelung der Gleichspannung ändert sich der Motorstrom naturgemäß zyklisch. Daher sieht eine Ausgestaltung der Erfindung vor, daß der Mittelwert des Stromes gebildet wird aus den Stromwerten nach dem Einschalten und kurz vor dem Ausschalten des Leistungsschalters. Dieser Mittelwert wird mit einem Grenzwert verglichen, damit der Überstrombetrieb erkannt werden kann. Darüber hinaus wird die Traktionshilfe nur dann eingeschaltet, wenn der interne Stellwert nach dem internen Hochlauf gleich dem vorgegebenen Sollwert ist. Von der Vorgabe eines Sollwertes am Fahrschalter bis zur Erzeugung eines auf den Motor gegebenen Stellwertes vergeht eine gewisse Zeit, die von den Zeitkonstanten der einzelnen Bauelemente abhängt. So wird etwa der Sollwert über einen Integrator auf die interne Steuerschaltung gegeben, an dessen Ausgang naturgemäß erst ein allmählich ansteigender Wert erscheint, auch wenn auf den Eingang der maximale Sollwert gegeben wird. Es versteht sich, daß das Kurzschlußschütz sinnfälligerweise nur eingeschaltet wird, wenn der interne Hochlauf abgeschlossen ist.

Zur Verwirklichung der erfindungsgemäßen Schaltung sieht eine Ausgestaltung der Erfindung ein Flipflop in der Treiberschaltung vor, das gesetzt wird, wenn der Motorstrom den Höchstwert erreicht bzw. überschreitet. Vom Flipflop wird ein Zeitglied geschaltet, das einen Impuls für das Kurzschlußschütz erzeugt. Nach dem Ende des Impulses wird das Flipflop zurückgesetzt.

Eine weitere Ausgestaltung der Erfindung sieht eine Meßvorrichtung für die Ankerspannung vor, die ein Ausschaltsignal erzeugt, wenn sich die Ankerspannung außerhalb eines vorgegebenen Spannungsbereiches befindet. Dadurch ist es möglich, den Motor gegen Kurzschluß zu schützen. Ein denkbarer Kurzschluß wäre über das Feld oder den Anker möglich.

Die Erfindung wird nachfolgend anhand von Zeichnungen näher erläutert.
- Fig. 1: zeigt eine Schaltungsanordnung für einen Gleichstromantrieb eines Flurförderfahrzeugs.
- Fig. 2: zeigt ein Blockschaltbild für den Betrieb eines Kurzschlußschützes der Schaltungsanordnung nach Fig. 1.
- Fig. 3: zeigt ein Diagramm für den Motorstrom.

Ein Gleichstrommotor weist einen Anker 10 und eine Feldwicklung 12 auf, die über eine Kontaktgruppe 14 in Reihe schaltbar sind, wobei je nach Betätigung der Kontakte der Kontaktgruppe 14 die Stromrichtung durch die Feldwicklung 17 vorgegeben wird. Die Kontaktgruppe 14 wird durch Kontaktschütze (nicht gezeigt) betätigt. Parallel zur beschriebenen Reihenschaltung sind Freilaufdioden 16, 18a in bekannter Weise geschaltet. In Reihe mit der beschriebenen Anordnung von Anker 10 und Feldwicklung 12 ist ein Leistungstransistor 18 geschaltet, der von einem Treiber 20 gesteuert wird, der seinerseits ein Pulsweitenmodulations-Signal von einer nicht gezeigten zentralen Steuerschaltung erhält. Das PWM-Signal bestimmt mithin die Öffnungs- bzw. Schließzeit des Transistorschalters 18 nach Maßgabe eines Sollwertes, der von einem Sollwertgeber vorgegeben und der in der zentralen Steuerschaltung zu einem Stellwert umgewandelt wird. Eine Stromregelung und eine Drehzahlregelung in der zentralen Steuerschaltung dienen zur Regelung des Stromes und der Drehzahl des Motors.

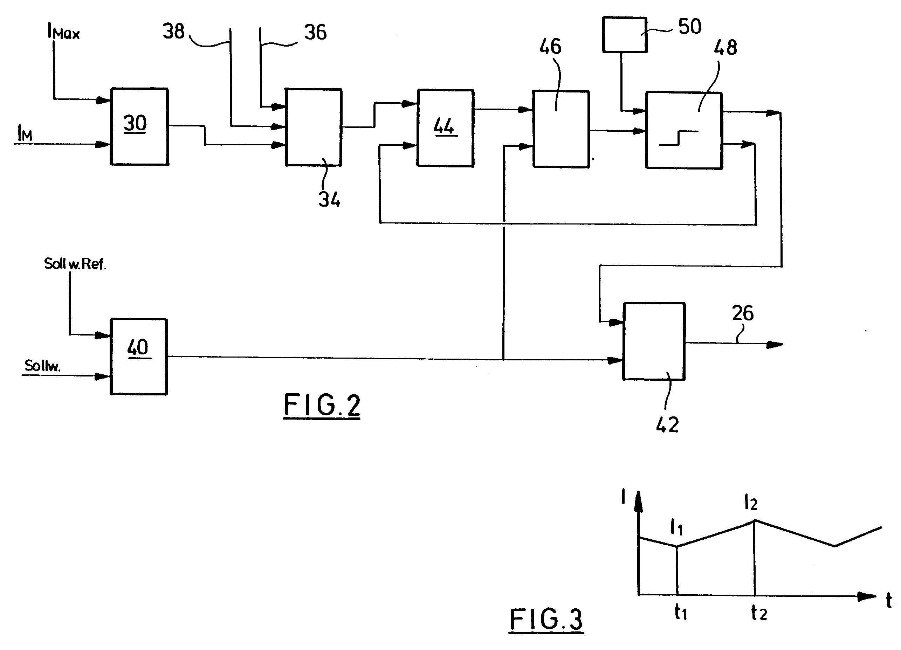

Parallel zum Transistor 18 ist ein Kurzschlußkontakt 21 geschaltet, der von einem Kurzschlußschütz 22 betätigt wird, das seinerseits von einem Schütztreiber 24 gesteuert wird. Der Schütztreiber 24 erhält ein Schütztreibersignal über eine Leitung 26. Die Erzeugung des Schütztreibersignals findet in einer Schaltungsanordnung statt, die schematisch in Fig. 2 dargestellt ist.

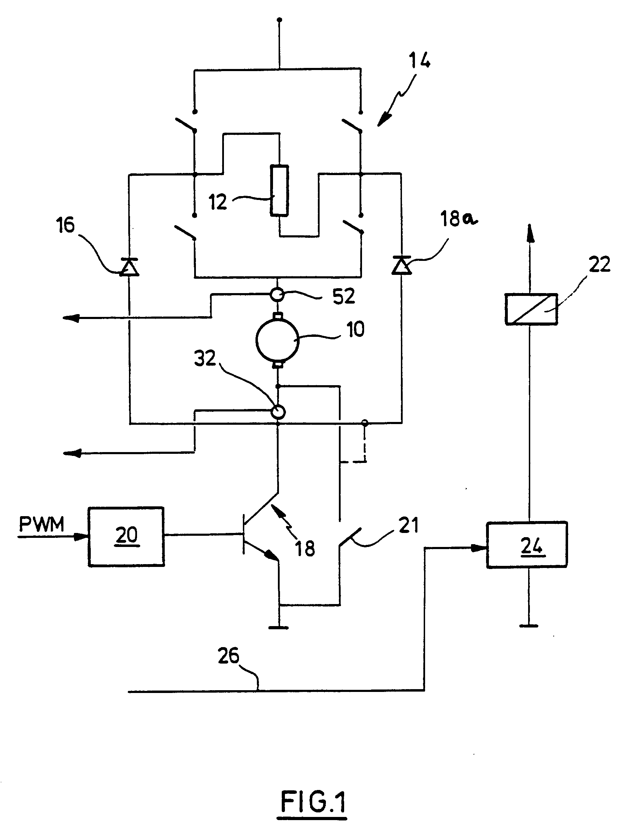

Ein Komparator 30 vergleicht den Motorstrom, der in Fig. 1 bei 32 gemessen wird, mit einem maximalen Strom Iₘₐₓ. Dieser maximale Strom ist z.B. ein Stromwert, der für eine vorgegebene Zeit durch den Gleichstrommotor fließen kann. Erreicht der Motorstrom diesen Wert oder ist sogar größer, gelangt ein Ausgangssignal auf ein UND-Glied 34, auf den zwei weitere Signale gegeben werden. Auf die Leitung 36 gelangt ein Freigabesignal, das die Inbetriebsetzung des Antriebs signalisiert. Auf die Leitung 38 gelangt ein Fahrbetriebssignal, das anzeigt, daß der sogenannte interne Hochlauf abgeschlossen ist. Mit anderen Worten, der auf den Drehzahlregler gegebene Stellwert entspricht dem Sollwert. Ein zweiter Komparator 40 vergleicht den bereits erwähnten Sollwert und eine Sollwertreferenz miteinander. Sollwertreferenz ist z.B. 95 % des maximalen Sollwerts. Ist dieser Wert erreicht bzw. wird er überschritten, gelangt ein Ausgangssignal auf ein UND-Glied 42. Sind die UND-Bedingungen im UND-Glied 34 erfüllt, wird ein Flipflop 44 gesetzt, dessen Ausgangssignal auf ein UND-Glied 46 geht, dessen weiterer Eingang mit dem Ausgang des Komparators 40 verbunden ist. Das Ausgangssignal des UND-Glieds gelangt auf ein Zeitglied 48, das von einem Taktgeber 50 angesteuert wird. Ein erster Ausgang des Zeitglieds 48 ist mit dem UND-Glied 42 verbunden, während ein zweiter Ausgang mit dem Rücksetzeingang des Flipflops 44 verbunden ist.

Der bei 32 gemessene Strom verändert sich je nachdem, ob der Transistor 18 ein- oder ausgeschaltet ist. I₁ ist den Motorstrom nach dem Einschalten des Transistors 18, während I₂ den Motorstrom vor dem Ausschalten des Transistors darstellt. Der Motorstrom wird nun zu den definierten Zeitpunkten t₁ und t₂ periodisch gemessen. Außerdem wird der Mittelwert aus den Stromwerten gebildet. Er gelangt als I_{M} auf den Komparator 30. Erreicht dieser Stromwert einen maximalen Wert oder überschreitet er diesen, wird das Flipflop 44 gesetzt, wenn auch die anderen Bedingungen (interner Hochlauf und Freigabe) erfüllt sind. Dadurch erzeugt das Zeitglied 48 einen Steuerimpuls. Liefert der Komparator 40 ebenfalls ein Ausgangssignal, d.h. der Sollwert ist höher als eine Sollwertreferenz, d.h. er nähert sich dem maximalen Sollwert, wird der Impuls über die Steuerleitung 26 auf den Schütztreiber 24 gegeben. Dadurch wird das Schütz 22 betätigt und der Kontakt 21 schließt und überbrückt mithin den Transistor 18. Nach Zeitablauf wird der Impuls beendet, so daß der Schütz 22 den Kontakt 21 wieder öffnet. Außerdem erfolgt nach dem Impulsende ein Rücksetzen des Flipflops 44. Sind die Bedingungen für das Setzen des Flipflops 44 und die Ansteuerung des Zeitglieds 48 nach wie vor gegeben, erfolgt erneut die Erzeugung eines Steuerimpulses für den Schütztreiber, so daß der Kontakt 21 intermittierend geschlossen und geöffnet wird, wodurch der dem Gleichstrommotor aufgeprägte Strom begrenzt und ein Stromsprung bzw. Momentenstrom vermieden wird. Der impulsweise Betrieb des Kurzschlußschützes stellt mithin eine Traktionshilfe für das Förderfahrzeug dar, die verhindert, daß trotz Beaufschlagung mit einem hohen Drehmoment ein Schlüpfen des Antriebsrades verhindert wird.

In Fig. 1 wird außerdem bei 52 die Motorspannung gemessen, um festzustellen, ob der Anker 10 oder die Feldwicklung 12 Kurzschluß hat.

## Patentansprüche

1. Schaltungsanordnung für den Betrieb eines Gleichstrommotors als Antrieb für ein Fahrzeug, insbesondere Flurförderfahrzeug, mit
- einem elektronischen Leistungsschalter (18) im Stromkreis des Motors (10, 22), der in Abhängigkeit von einer Lastanforderung (Sollwert) impulsweise angesteuert wird,
- einem zum Leistungsschalter (18) parallel geschalteten, von einem Kurzschlußschütz (22) betätigbaren Kurzschlußkontakt (21), und
- einer Treiberschaltung (24) für das Kurzschlußschütz (22), die den Kurzschlußkontakt (21) schließt und den Leistungschalter (18) überbrückt, wenn der Motorstrom oder der Sollwert, oder ein aus einem steuerungsinternen Hochlauf des Sollwerts resultierenden Stellwert einen vorgegebenen Wert erreicht,
dadurch gekennzeichnet, daß die Treiberschaltung (24) das Kurzschlußschütz (22) impulsweise dann ansteuert, wenn der Motorstrom einen vorgegebenen Höchstwert überschreitet und der Stellwert nach dem Hochlauf dem vorgegebenen Sollwert entspricht.

2. Schaltungsanordnung nach Anspruch 1, dadurch gekennzeichnet, daß der Mittelwert des Stroms gebildet wird aus den Stromwerten nach dem Einschalten und vor dem Ausschalten des Leistungsschalters (18).

3. Schaltungsanordnung nach einem der Ansprüche 1 bis 2, dadurch gekennzeichnet, daß die Treiberschaltung für das Kurzschlußschütz (22) ein Flipflop (44) aufweist, das gesetzt wird, wenn der Motorstrom (I_{M}) den Höchstwert (Iₘₐₓ) erreicht oder überschreitet, vom Flipflop (44) ein Zeitglied (48) geschaltet wird, das einen Impuls für das Kurzschlußschütz (22) erzeugt und das Flipflop (44) mit dem Ende des Impulses zurückgesetzt wird.

4. Schaltunganordnung nach einem der Ansprüche 1 bis 3, dadurch gekennzeichnet, daß eine Meßvorrichtung (52) für die Ankerspannung vorgesehen ist, die ein Ausschaltsignal erzeugt, während sich die Ankerspannung außerhalb eines vorgegebenen Spannungsbereiches befindet.

## Claims

1. A circuit arrangement for the control of a DC motor for driving a vehicle, in particular an industrial truck, comprising
- an electronic power switch (18) connected to the motor (10,22) which is pulse-controlled depending on the load requirement (desired value);
- a short circuit switch (21) to be actuated by a short circuit contactor (22), said switch being connected in parallel to the power switch (18) and
- a driver stage (24) for the short circuit contactor (22) for closing the short circuit switch (21) and shunting the power switch (18), when the motor current or the desired value or a control value resulting from an internal controlled starting up of the desired value exceeds a predetermined value,
characterized in that the driver stage (24) pulse-controls the short circuit contactor (22) then, when the motor current exceeds a predetermined maximum value and when the control value corresponds to the predetermined desired value after the starting up operation.

2. The circuit arrangement of claim 1, characterized in that the mean value of the current is generated from the current values after switching on and before switching off the power switch (18).

3. The circuit arrangement of one of claims 1 to 2, characterized in that the driver stage for the short circuit contactor (22) comprises a flip-flop (44) which will be set when the motor current (I_{M}) reaches the maximum value (I_{MAX}) or exceeds it, that the flip-flop (44) actuates a timing device (48) generating a pulse for the short circuit contactor (22) and which flip-flop (44) will be set after termination of the pulse.

4. The circuit arrangement of one of the claims 1 to 3, characterized in that a measuring means (52) is provided for the armature voltage to generate a switching off signal, while the armature voltage is beyond a predetermined voltage range.

## Revendications

1. Montage pour la commande d'un moteur à courant continu comme dispositif d'entraînement pour un véhicule, notamment un véhicule de manutention, comportant
- un interrupteur électronique de puissance (18) situé dans le circuit du moteur (10,22) et qui est commandé de façon impulsionnelle en fonction d'une demande de charge (valeur de consigne),
- un contact de court-circuit (21) branché en parallèle avec l'interrupteur de puissance (18) et pouvant être actionné par un contacteur de court-circuit (22), et
- un circuit d'attaque (24) pour le contacteur de court-circuit (22), qui ferme le contact de court-circuit (21) et shunte l'interrupteur de puissance (18), lorsque le courant du moteur ou la valeur de consigne ou une valeur de réglage, qui résulte d'une mise à niveau élevé, d'une manière interne lors de la commande, de la valeur de consigne atteint une valeur prédterminée,
caractérisé en ce que le circuit d'attaque (24) commande de façon impulsionnelle le contacteur de court-circuit (22) lorsque le courant du moteur dépasse une valeur maximale prédterminée et que la valeur de réglage correspond, après la mise à un niveau élevé, à la valeur de consigne prédéterminée.

2. Montage selon la revendication 1, caractérisé en ce que la valeur moyenne du courant est formée à partir des valeurs du courant après la fermeture et avant l'ouverture de l'interrupteur de puissance (18).

3. Montage selon l'une des revendications 1 et 2, caractérisé en ce que le circuit d'attaque pour le contacteur de court-circuit (22) comporte une bascule bistable (44), qui est déclenchée lorsque le courant (IM) du moteur atteint ou dépasse la valeur maximale (Imax), que la bascule bistable (44) active un circuit de temporisation (48), qui produit une impulsion pour le contacteur de court-circuit (22), et que la bascule bistable (44) est remise à l'état initial à la fin de l'impulsion.

4. Montage selon l'une des revendications 1 à 3, caractérisé en ce qu'il est prévu un dispositif de mesure (52) de la tension d'induit, qui produit un signal de débranchement pendant que la tension d'induit se situe à l'extérieur d'une gamme prédterminée de tensions.
